(19) Europäisches Patentamt
European Patent Office
Office européen des brevets

(11) **EP 4 670 973 A1**

(12) **EUROPEAN PATENT APPLICATION**
published in accordance with Art. 153(4) EPC

(43) Date of publication:
**31.12.2025 Bulletin 2026/01**

(51) International Patent Classification (IPC):
***B32B 27/36*** (2006.01)    ***B32B 27/30*** (2006.01)
***B32B 27/08*** (2006.01)    ***C08G 63/16*** (2006.01)

(21) Application number: **24793091.0**

(22) Date of filing: **15.02.2024**

(86) International application number:
**PCT/KR2024/095175**

(87) International publication number:
**WO 2024/219907 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.04.2023 KR 20230051511**

(71) Applicant: **SK microworks Co., Ltd.
Chungcheongbuk-do 27818 (KR)**

(72) Inventors:
• **LEE, Seokin
Suwon-Si, Gyeonggi-do 16336 (KR)**
• **HAN, Kweonhyung
Suwon-Si, Gyeonggi-do 16336 (KR)**
• **JEONG, Bichnam
Suwon-si, Gyeonggi-do 16336 (KR)**

(74) Representative: **BCKIP Part mbB
MK1
Landsbergerstraße 98, 3.Stock
80339 München (DE)**

(54) **MULTILAYER FILM, DISPLAY DEVICE, AND PACKAGING MATERIAL**

(57)     A multilayer film according to the embodiments comprises a laminate including a first layer and a second layer disposed on the first layer; the first layer comprises a polyester resin including diol residues and dicarboxylic acid residues; the second layer comprises a butenediol vinyl alcohol copolymer; and the laminate has an oxygen permeability of 0.1 cc/m²·day·atm or less. The multilayer film provides low oxygen permeability, an interface that is not easily delaminated, and improved processability, and a display device and a packaging material comprising the multilayer film are provided. Accordingly, oxygen ingress from outside into elements of a display device or packaged foods can be effectively blocked. In addition, the multilayer film exhibits excellent processability due to a non-delaminating interface and a small maximum thickness deviation. Furthermore, resins applied to the multilayer film have controlled melting and decomposition temperatures, enabling easy co-extrusion. Moreover, the multilayer film has high water dispersibility, thereby facilitating recycling.

100

FIG. 1

EP 4 670 973 A1

## Description

### Technical Field

Embodiment relates to a multilayer film having a low oxygen permeability, a display device comprising the multilayer film, and a packaging material comprising the multilayer film.

### Background Art

A film capable of blocking oxygen is required in products of various industrial fields. For example, packaging materials for foods where freshness is important, and sealing materials for electronic components sensitive to oxygen are included. In particular, organic materials contained in organic light emitting elements and quantum dots contained in quantum dot layers are vulnerable to oxygen. In order to protect them, there has been an increasing need for a film having appropriate heat resistance, mechanical strength, and transparency, while simultaneously having a low oxygen permeability.

Polyester has stable properties in terms of heat resistance, mechanical strength, and transparency. Accordingly, polyester has been widely used in various fields such as containers, packaging materials, films, and cables.

However, polyester has a high oxygen permeability, making it difficult to apply to fields requiring oxygen blocking. This problem could be compensated by manufacturing a multilayer film comprising at least one layer including a material having low oxygen permeability, such as an ethylene vinyl alcohol copolymer (EVOH).

Nevertheless, polyester and ethylene vinyl alcohol copolymer (EVOH) have a problem of delamination at the interface. Such a problem may be compensated by methods such as depositing an adhesive layer at the interface, but this leads to a complicated process and a drawback of increasing the thickness of the film.

In addition, a difference in melting points and other physical properties between polyester and ethylene vinyl alcohol copolymer (EVOH) may cause many problems during formation of a laminate. This leads to deterioration in processability.

The foregoing background art is technical information that the inventor possessed for deriving the present invention, or acquired in the process of deriving the present invention, and it cannot necessarily be said that such information was disclosed to the general public prior to the filing of the present application.

As related prior art, there are: (Patent Document 1) Korean Registered Patent No. 10-0516550, (Patent Document 2) Korean Registered Patent No. 10-1890108, and (Patent Document 3) Korean Registered Patent No. 10-1970168.

## DETAILED DESCRIPTION OF THE INVENTION

### Technical Problem

An object of the embodiment is to provide a multilayer film having a low oxygen permeability, an interface that is not easily delaminated, and improved processability, as well as a display device and a packaging material comprising the multilayer film.

### Solution to Problem

A multilayer film of one embodiment for achieving the above object comprises a laminate including a first layer and a second layer disposed on the first layer,

wherein the first layer comprises a polyester resin including diol residues and dicarboxylic acid residues,
the second layer comprises a butanediol vinyl alcohol copolymer, and
the laminate has an oxygen permeability of 0.1 cc/m$^2$·day·atm or less at 23°C.

The multilayer film may be such that the diol residues are selected from a group consisting of ethylene glycol residues, diethylene glycol residues, neopentyl glycol residues, and combinations thereof.

The diol residues may comprise 5 mol% to 35 mol% of neopentyl glycol residues, based on the total diol residues.

A melting point of the first layer may be equal to or lower than a thermal decomposition temperature of the second layer.

A glass transition temperature of the second layer may be 60°C or higher.

The multilayer film may have a maximum thickness deviation of 3 μm or less, as represented by Equation 1 below.

[Equation 1]

$$MTD_{50} = THK_{max} - THK_{min}$$

In Equation 1, $MTD_{50}$ is the maximum thickness deviation, $THK_{max}$ is a maximum thickness when the thickness is measured at 2 cm intervals in a specimen of the multilayer film having a width of 50 cm, and $THK_{min}$ is a minimum thickness when the thickness is measured at 2 cm intervals in a specimen of the multilayer film having a width of 50 cm.

The laminate may be formed by alternately laminating the first layer and the second layer into 3 to 225 layers, and the first layer may be located at an outermost layer of the laminate.

The laminate may have a water vapor transmission rate of 50 g/m²·day or less.

A display device according to another embodiment comprises a light emitting portion and an encapsulation layer disposed on the light emitting portion, wherein the encapsulation layer may comprise the multilayer film described above.

A packaging material according to another embodiment may comprise the multilayer film described above.

### Effects of Invention

The multilayer film of the embodiment provides a multilayer film having a low oxygen permeability, an interface that is not easily delaminated, and improved processability, as well as a display device and a packaging material comprising the multilayer film. Accordingly, the embodiment may effectively block oxygen introduced from outside into elements of a display device or packaged foods.

In addition, the multilayer film is not easily delaminated at the interface and has a small maximum thickness deviation, thereby exhibiting excellent processability. Furthermore, resins applied to the multilayer film have controlled melting temperatures and decomposition temperatures, enabling easy co-extrusion. Moreover, the multilayer film has high water dispersibility, thereby facilitating recycling.

### Brief Description of Drawings

FIG. 1 is a conceptual diagram illustrating a laminate included in a multilayer film according to an embodiment.
FIG. 2 is a conceptual diagram illustrating a laminate included in a multilayer film according to another embodiment.
FIG. 3 is a conceptual diagram illustrating a laminate included in a multilayer film according to still another embodiment.

### MODE FOR CARRYING OUT THE INVENTION

Hereinafter, exemplary embodiments of the present invention will be described in detail with reference to the accompanying drawings so that those skilled in the art to which the invention pertains may easily carry out the invention. However, the present invention may be implemented in various different forms and is not limited to the embodiments described herein. Throughout the specification, the same reference numerals are assigned to similar parts.

In the entire specification, the term "combinations thereof" included in a Markush-type expression means a mixture or combination of one or more components selected from a group of components described in the Markush-type expression, and indicates that one or more selected from the group of components may be comprised.

In the entire specification, the expression "A and/or B" means "A, B, or A and B."

In the entire specification, terms such as "first" and "second" are used to distinguish the same terms from each other. In addition, unless clearly indicated otherwise by the context, singular expressions also include plural expressions.

In the entire specification, when a part is described as "comprising" a certain component, this means that the part may further comprise another component, unless explicitly stated otherwise.

In the entire specification, the expression that "B is disposed on A" means that B is positioned directly in contact with A or positioned on A with another layer interposed therebetween, and is not limited to B being positioned in direct contact with a surface of A.

In the present specification, the drawings may be exaggeratedly or schematically illustrated for the purpose of explanation, and therefore, the scope of rights of the embodiment is not to be interpreted as being limited thereby.

A multilayer film in which a layer performing an oxygen blocking function is inserted into a layer comprising a polyester resin has been applied. Such a multilayer film has been used as a material having excellent mechanical and optical properties while blocking oxygen from outside. However, conventional polyester resin layers and oxygen barrier layers tended to be delaminated at the interface. Accordingly, a separate adhesive layer was required between each layer.

This complicated the process, increased the thickness of the multilayer film, and made recycling of the film difficult.

As a result of studies conducted to solve the above problems, the inventors of the embodiment invented a multilayer film in which an interface between a first layer comprising a polyester resin and a second layer performing an oxygen blocking function is not delaminated.

According to one aspect of the embodiment, the invention may provide a multilayer film having excellent mechanical and optical properties, superior oxygen and moisture barrier properties, improved processability, and recyclability of polyester resin.

In addition, a display device comprising an encapsulation layer having such properties may be provided.

In addition, a packaging material having such properties may be provided.

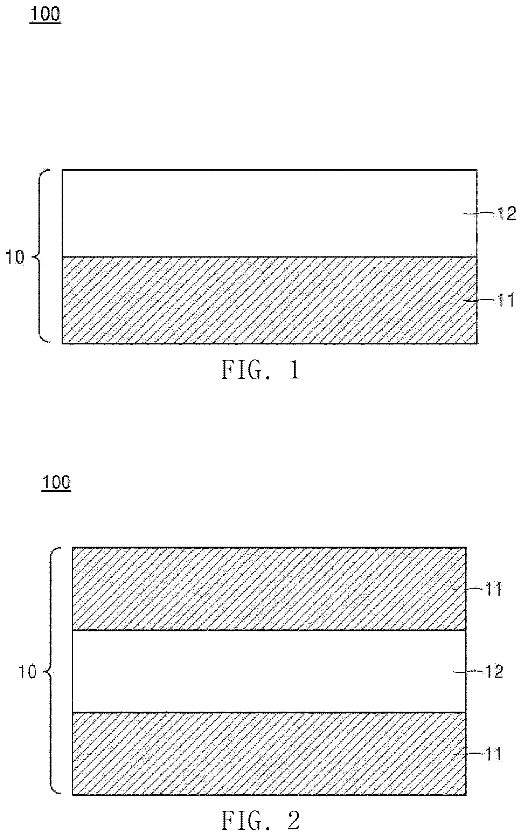

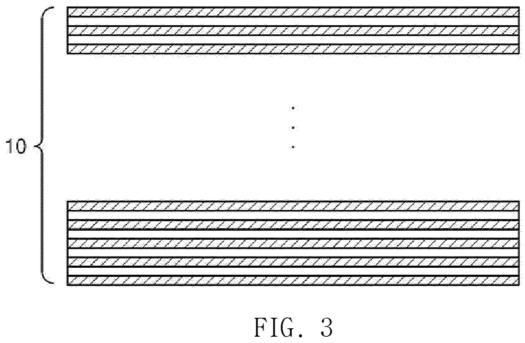

FIG. 1 is a conceptual diagram illustrating a laminate included in a multilayer film according to an embodiment, FIG. 2 is a conceptual diagram illustrating a laminate included in a multilayer film according to another embodiment, and FIG. 3 is a conceptual diagram illustrating a laminate included in a multilayer film according to still another embodiment. Hereinafter, the embodiments will be described in detail with reference to the drawings.

## Laminate

A laminate 10 according to the embodiment is a laminate in which a first layer 11 comprising a polymer resin different from a second layer 12 and the second layer 12 are alternately laminated.

The first layer 11 according to the embodiment comprises a copolymerized polyester resin.

The first layer 11 may prevent the second layer 12 from being directly exposed to an external environment, thereby preventing deterioration of physical properties of the laminate or the multilayer film.

The copolymerized polyester resin may be a polymerization product of diols and dicarboxylic acids comprising two or more diol residues and one or more dicarboxylic acid residues. Specifically, the copolymerized polyester resin may be a polymerization product of diols and dicarboxylic acids comprising three or more diol residues and one or more dicarboxylic acid residues.

The diol residues may comprise aliphatic diol residues, alicyclic diol residues, aromatic diol residues, or derivatives thereof. The aliphatic diol residues may be, for example, aliphatic diol residues having 2 to 10 carbon atoms, and may have a linear or branched structure.

Specific examples of the aliphatic diols comprising the aliphatic diol residues may include ethylene glycol, diethylene glycol, neopentyl glycol, 1,3-propane diol, 1,2-octane diol, 1,3-octane diol, 2,3-butane diol, 1,3-butane diol, 1,4-butane diol, 1,5-pentane diol, 2-butyl-2-ethyl-1,3-propane diol, 2,2-diethyl-1,5-pentane diol, 2,4-diethyl-1,5-pentane diol, 3-methyl-1,5-pentane diol, 1,1-dimethyl-1,5-pentane diol, 1,6-hexane diol, 2-ethyl-3-methyl-1,5-hexane diol, 2-ethyl-3-ethyl-1,5-hexane diol, 1,7-heptane diol, 2-ethyl-3-methyl-1,5-heptane diol, 2-ethyl-3-ethyl-1,6-heptane diol, 1,8-octane diol, 1,9-nonane diol, 1,10-decane diol, derivatives thereof, or any combinations thereof.

The dicarboxylic acid residues may comprise aromatic dicarboxylic acid residues, aliphatic dicarboxylic acid residues, alicyclic dicarboxylic acid residues, or esterified residues thereof.

Specific examples of the dicarboxylic acids comprising the dicarboxylic acid residues may include terephthalic acid, dimethyl terephthalate, isophthalic acid, naphthalene dicarboxylic acid, orthophthalic acid, adipic acid, azelaic acid, sebacic acid, decane dicarboxylic acid, and esterified products thereof, or combinations thereof. Specifically, the dicarboxylic acid may comprise one or more selected from the group consisting of terephthalic acid, dimethyl terephthalate, naphthalene dicarboxylic acid, and orthophthalic acid.

According to one embodiment, the copolymerized polyester resin may be a polymerization product of diols comprising two or more diol residues and aromatic dicarboxylic acids comprising one or more aromatic dicarboxylic acid residues. According to another embodiment, the copolymerized polyester resin may be a polymerization product of diols comprising ethylene glycol and one or more comonomers, and one or more aromatic dicarboxylic acids. According to still another embodiment, the copolymerized polyester resin may be a polymerization product of diols comprising ethylene glycol and two or more comonomers, and aromatic dicarboxylic acids.

The diol residues may comprise ethylene glycol residues. The diol may comprise 50 to 90 mol% of ethylene glycol, based on the total diol. Specifically, the diol may comprise 60 to 90 mol%, 63 to 85 mol%, or 65 to 83 mol% of ethylene glycol, based on the total diol. When these ranges are satisfied, the polyester resin may exhibit improved heat shrinkage and a reduced clumping fraction.

The diol may comprise, as a comonomer, diols other than ethylene glycol among those exemplified above. For example, the diol may comprise, as a comonomer, one or more selected from diethylene glycol, 1,4-cyclohexane dimethanol, 1,3-propane diol, 1,2-octane diol, 1,3-octane diol, 2,3-butane diol, 1,3-butane diol, 1,4-butane diol, 1,5-pentane diol, neopentyl glycol, 2-butyl-2-ethyl-1,3-propane diol, 2,2-diethyl-1,5-pentane diol, 2,4-diethyl-1,5-pentane diol, 3-methyl-1,5-pentane diol, 1,1-dimethyl-1,5-pentane diol, or combinations thereof. Specifically, the diol may comprise, as a comonomer, one or more selected from the group consisting of neopentyl glycol, cyclohexane dimethanol, and diethylene glycol.

Specifically, the diol may comprise diethylene glycol as a comonomer. The content of diethylene glycol among the diols may be 1 to 15 mol%, based on the total diol. More specifically, the diol may comprise 1 to 10 mol%, 1 to 5 mol%, 5 to 10 mol%, or 3 to 7 mol% of diethylene glycol, based on the total diol. When these ranges are satisfied, the polyester resin may exhibit improved heat shrinkage and a reduced clumping fraction.

In addition, the diol may comprise at least one selected from neopentyl glycol and cyclohexane dimethanol as a comonomer. The content of neopentyl glycol and/or cyclohexane dimethanol among the diols may be 1 to 50 mol%, based on the total diol. More specifically, the content may be 10 to 40 mol%, 10 to 30 mol%, 20 to 40 mol%, 20 to 30 mol%, 20 to 25 mol%, or 25 to 30 mol%. When these ranges are satisfied, the copolymerized polyester resin may maintain an appropriate heat shrinkage rate in a direction perpendicular to the main shrinkage direction even at high temperatures. When the content of neopentyl glycol and/or cyclohexane dimethanol exceeds the ranges, the copolymerized polyester resin may excessively expand in a direction perpendicular to the main shrinkage direction during stretching, thereby causing wrinkles or deformation. In contrast, when the content is less than the ranges, the copolymerized polyester resin may have an enlarged amorphous region, which may improve the shrinkage property in the main shrinkage direction, but lower the shrinkage property in the perpendicular direction, resulting in an increased coefficient of expansion.

Specifically, the diol may comprise at least one selected from neopentyl glycol and cyclohexane dimethanol; and diethylene glycol as comonomers. For example, the diol may comprise 20 to 30 mol% of at least one selected from neopentyl glycol and cyclohexane dimethanol; and 1 to 15 mol% of diethylene glycol.

The dicarboxylic acid may comprise terephthalic acid or dimethyl terephthalate in an amount of 80 mol% or more, 90 mol% or more, or 95 mol% or more, based on the total dicarboxylic acid. However, the dicarboxylic acid may substantially not comprise isophthalic acid. For example, the content of isophthalic acid in the dicarboxylic acid may be 5 mol% or less, 3 mol% or less, or 1 mol% or less. Specifically, the diol may comprise at least one selected from neopentyl glycol, cyclohexane dimethanol, diethylene glycol, and combinations thereof in an amount of 20 to 40 mol%, and the content of isophthalic acid among the aromatic dicarboxylic acids may be less than 1 mol%. In a specific embodiment, the copolymerized polyester resin may be glycol-modified polyethylene terephthalate (PETG).

The copolymerized polyester resin may further comprise an alcohol other than the diol, for example, a monohydric alcohol. The monohydric alcohol may be methanol, ethanol, isopropanol, allyl alcohol, or benzyl alcohol. Specifically, the copolymerized polyester resin may comprise 10 to 40 parts by weight, or 15 to 30 parts by weight, of the monohydric alcohol based on 100 parts by weight of the diol.

According to one embodiment, a melting point of the first layer 11 may be 170 to 230°C. Specifically, the melting point of the first layer 11 may be 180 to 220°C, or 190 to 210°C. When these ranges are satisfied, the melting point of the first layer 11 may be equal to or lower than a thermal decomposition temperature of the second layer 12. Therefore, the first layer 11 and the second layer 12 of the embodiment may be easily subjected to a co-extrusion process.

The second layer 12 according to the embodiment comprises a butenediol vinyl alcohol copolymer (BVOH).

The butenediol vinyl alcohol copolymer (BVOH) may be produced by copolymerization of butanediol and vinyl acetate followed by hydrolysis of the vinyl acetate.

Alternatively, the butenediol vinyl alcohol copolymer (BVOH) may be applied as BVOH sold by Mitsubishi Chemical under the name NICHIGO G-POLYMER™. Specifically, it may be any one selected from the group consisting of pellet-type products of NICHIGO G-POLYMER™, such as AVE8077P, BVE8049P, OKS-8074P, OKS-8211P, and combinations thereof.

The second layer 12 is a water-soluble layer. In particular, the second layer 12 dissolves not only in hot water but also in relatively low-temperature water. Specifically, the second layer 12 may be substantially completely dissolved within 1 hour in water at 90°C, substantially completely dissolved within 1 hour in water at 70°C, and substantially completely dissolved within 2 hours in water at 20°C. Since the second layer 12 is highly soluble in water, the laminate 10 may have enhanced water dispersibility, as described later. In addition, the second layer 12 may be well dissolved in water, leaving substantially no residual composition on the first layer 11 during recycling of the laminate 10.

The second layer 12 may have a melt flow rate (MFR) of 10 g/10 min or more at 210°C. Specifically, the second layer 12 may have a melt flow rate of 15 g/10 min or more, 20 g/10 min or more, 25 g/10 min or more, or 30 g/10 min or more. The second layer 12 may have a melt flow rate of 100 g/10 min or less. When these ranges are satisfied, the manufacturability of the second layer 12 may be improved. For example, the second layer 12 may be easily formed by a co-extrusion process.

The viscosity of the second layer 12 may be 30,000 Poise or less at 230°C. Specifically, the viscosity of the second layer 12 may be 20,000 Poise or less, 10,000 Poise or less, or 9,000 Poise or less at 230°C. The viscosity of the second layer 12 may be 100 Poise or more at 230°C. Specifically, the viscosity of the second layer 12 may be 300 Poise or more, 500 Poise or more, or 1,000 Poise or more at 230°C. When these ranges are satisfied, the second layer 12 may secure flowability during extrusion, making it easier to form by a co-extrusion process.

The thermal decomposition temperature of the second layer 12 may be 210°C to 230°C. Specifically, the thermal decomposition temperature of the second layer 12 may be 215 to 225°C, or 217 to 223°C. In general, the melting point of polyethylene terephthalate (PET), as a typical polyester, is higher than the thermal decomposition temperature of polyvinyl alcohol (PVOH), making it difficult to apply a co-extrusion process. In the embodiment, however, the melting point of the first layer 11 may be equal to or lower than the thermal decomposition temperature of the second layer 12. Therefore, the first layer 11 and the second layer 12 of the embodiment may be easily subjected to a co-extrusion process.

The glass transition temperature of the second layer 12 may be 60°C or higher. Specifically, the glass transition temperature of the second layer 12 may be 65°C or higher, 70°C or higher, or 75°C or higher. The glass transition temperature of the second layer 12 may be 200°C or lower, 150°C or lower, or 100°C or lower. Since a typical display device may have a high-temperature environment inside, a material with heat resistance may be required. When these ranges are satisfied, the heat resistance of the second layer 12 may be enhanced.

The laminate 10 according to the embodiment may comprise an adhesive layer between the first layer 11 and the second layer 12, or may be in direct contact. Even when the first layer 11 and the second layer 12 are in direct contact, they exhibit high adhesion such that delamination does not substantially occur even under high-temperature and high-humidity conditions. The laminate 10 was confirmed not to exhibit delamination between the first layer 11 and the second layer 12 even after being exposed for 500 hours at 85°C and 85% relative humidity using a thermo-hygrostat chamber (QM200M, QMESYS Co.). Accordingly, the multilayer film may omit an interlayer adhesive, thereby simplifying the process and facilitating adjustment of the film thickness.

The laminate 10 may comprise 1 to 50 parts by weight of the second layer 12, based on 100 parts by weight of the laminate 10. Specifically, the laminate 10 may comprise 3 to 40 parts by weight of the second layer 12, or 5 to 30 parts by weight of the second layer 12, based on 100 parts by weight of the laminate 10.

The laminate 10 may have excellent water dispersibility, thereby facilitating recycling. Specifically, when ten specimens of the laminate 10, each 1 cm $\times$ 1 cm, are placed in water at $60 \pm 5$°C and stirred at 300 rpm for 120 minutes, the second layer 12 dissolves in water. In addition, when ten specimens of the laminate 10, each 0.5 cm $\times$ 0.25 cm, are placed in a 1 wt% aqueous solution of sodium hydroxide (NaOH) at $85 \pm 5$°C and stirred at 300 rpm for 15 minutes, the second layer 12 dissolves in the 1 wt% aqueous NaOH solution. In this case, the first layer 11 does not dissolve, thereby enabling recycling.

The laminate 10 may have an oxygen permeability of 0.1 cc/m$^2$·day·atm or less. Specifically, the laminate 10 may have an oxygen permeability of 0.07 cc/m$^2$·day·atm or less, 0.05 cc/m$^2$·day·atm or less, 0.03 cc/m$^2$·day·atm or less, or 0.01 cc/m$^2$·day·atm or less. The laminate 10 may have an oxygen permeability of 0.0001 cc/m$^2$·day·atm or more. When these ranges are satisfied, the multilayer film may effectively block oxygen introduced from outside.

The laminate 10 may have a water vapor transmission rate of 1,000 g/m$^2$·day or less at a temperature of $37.8 \pm 0.5$°C. Specifically, the laminate 10 may have a water vapor transmission rate of 100 g/m$^2$·day or less, 50 g/m$^2$·day or less, 45 g/m$^2$·day or less, 40 g/m$^2$·day or less, 36 g/m$^2$·day or less, 25 g/m$^2$·day or less, 24 g/m$^2$·day or less, or 23 g/m$^2$·day or less. The laminate 10 may have a water vapor transmission rate of 0.0001 g/m$^2$·day or more. When these ranges are satisfied, the multilayer film may effectively block moisture introduced from outside. The water vapor transmission rate is based on results measured using a PERMATRAN-W700 tester (MOCON, USA) in accordance with ASTM F1249-20 under temperature and humidity conditions of $37.8 \pm 0.5$°C and 100% RH, at a thickness selected from 0.3 mm to 0.15 mm.

The total number of layers of the laminate 10 may be 4 or more, 6 or more, 10 or more, 31 or more, 35 or more, or 37 or more. The laminate 10 may have 425 or fewer layers, 325 or fewer layers, or 225 or fewer layers. The total number of layers of the laminate 10 is determined on the basis that, when a skin layer adjacent to the first layer 11 of the laminate 10 is formed of the same resin as that of the first layer 11 such that distinction between the first layer 11 and the skin layer is difficult, the presence of the first layer 11 is assumed.

The laminate 10 may provide a multilayer film in which mechanical strength of the polyester film is maintained at a proper level or more, by alternately laminating the first layer 11 and the second layer 12 into a multilayer structure.

The laminate 10 may be such that the first layer 11 and the second layer 12 are alternately laminated into 3 or more layers, and may be alternately laminated into 3 to 255 layers. In this case, even when a relatively large amount of the second-layer composition is applied, manufacturability may be further improved.

## Skin Layer

The multilayer film of the embodiment may further comprise a skin layer.

The skin layer may be disposed on one surface or the other surface of the laminate 10.

The skin layer may be disposed on each of one surface and the other surface of the laminate 10. In such a case, the skin layer may prevent the laminate 10 from being directly exposed to the external environment, thereby preventing deterioration of physical properties.

The resin of the first layer 11 may be applied to the skin layer. In such a case, mechanical and optical properties and processability of the multilayer film may be further improved.

A thickness of the skin layer may be applied at a thickness ratio of 5 to 30, based on 100 of the thickness of the laminate 10. Specifically, the thickness of the skin layer may be applied at a thickness ratio of 10 to 25, or 15 to 20, based on 100 of the thickness of the laminate 10.

When the skin layers are applied to both upper and lower portions of the laminate 10, the thickness of the skin layer described above refers to the thickness of one skin layer.

**Multilayer Film**

The multilayer film 100 may have an oxygen permeability of 0.1 cc/m$^2$·day·atm or less when measured at a temperature of 23.0 ± 0.5°C. Specifically, the multilayer film 100 may have an oxygen permeability of 0.07 cc/m$^2$·day·atm or less, 0.05 cc/m$^2$·day·atm or less, 0.03 cc/m$^2$·day·atm or less, or 0.01 cc/m$^2$·day·atm or less. When these ranges are satisfied, the multilayer film 100 may effectively block oxygen introduced from outside.

The multilayer film 100 may have a water vapor transmission rate of 1,000 g/m$^2$·day or less, measured under the conditions of 37.8 ± 0.5°C and 100% RH in accordance with ASTM F1249-20. Specifically, the multilayer film may have a water vapor transmission rate of 100 g/m$^2$·day or less, 50 g/m$^2$·day or less, 45 g/m$^2$·day or less, 40 g/m$^2$·day or less, 36 g/m$^2$·day or less, 25 g/m$^2$·day or less, 24 g/m$^2$·day or less, or 23 g/m$^2$·day or less. The multilayer film 100 may have a water vapor transmission rate of 0.0001 g/m$^2$·day or more. When these ranges are satisfied, the multilayer film may effectively block moisture introduced from outside.

The total thickness of the multilayer film may be 10 to 1,000 $\mu$m. Specifically, the total thickness of the multilayer film may be 20 to 500 $\mu$m, 30 to 250 $\mu$m, 40 to 200 $\mu$m, or 60 to 100 $\mu$m. The multilayer film may omit an adhesive layer between the first layer 11 and the second layer 12, thereby facilitating adjustment of the total thickness.

The multilayer film may have a maximum thickness deviation (MTD$_{50}$) of 3 $\mu$m or less, as represented by Equation 1 below. Specifically, the multilayer film may have a maximum thickness deviation (MTD$_{50}$) of 2.7 $\mu$m or less, 2.5 $\mu$m or less, or 2.0 $\mu$m or less. When these ranges are satisfied, the multilayer film may easily maintain flatness, thereby improving processability.

$$[\text{Equation 1}]$$

$$MTD_{50} = THK_{max} - THK_{min}$$

In Equation 1, THK$_{max}$ is a maximum thickness when the thickness is measured at 2 cm intervals in a specimen of the multilayer film having a width of 50 cm, and THK$_{min}$ is a minimum thickness when the thickness is measured at 2 cm intervals in a specimen of the multilayer film having a width of 50 cm.

The multilayer film may have a maximum thickness deviation (MTD$_{200}$) of 3 $\mu$m or less, as represented by Equation 2 below. Specifically, the multilayer film may have a maximum thickness deviation (MTD$_{200}$) of 2.7 $\mu$m or less, 2.5 $\mu$m or less, or 2.0 $\mu$m or less. When these ranges are satisfied, the multilayer film may easily maintain flatness, thereby improving processability.

$$[\text{Equation 2}]$$

$$MTD_{200} = THK_{max} - THK_{min}$$

In Equation 1, THK$_{max}$ is a maximum thickness when the thickness is measured at 2 cm intervals in a specimen of the multilayer film having a width of 200 cm, and THK$_{min}$ is a minimum thickness when the thickness is measured at 2 cm intervals in a specimen of the multilayer film having a width of 200 cm.

The multilayer film may have a light transmittance of 80% or more in a visible light region having a wavelength of 380 nm to 780 nm. Specifically, the multilayer film may have a light transmittance of 85% or more, 90% or more, or 95% or more in the visible light region of 380 nm to 780 nm. The multilayer film may have a light transmittance of less than 100% in the visible light region of 380 nm to 780 nm. When these ranges are satisfied, the multilayer film may implement excellent optical properties by being applied to a display device described later, due to its excellent light transmittance.

The multilayer film may have a haze of 30% or less. Specifically, the multilayer film may have a haze of 15% or less, 10% or less, 9% or less, or 5% or less. The multilayer film may have a haze of 0.001% or more. When these ranges are satisfied, transparency is ensured, making the multilayer film suitable for various applications requiring light transmission.

**Method of Manufacturing Multilayer Film**

A method of manufacturing a multilayer film according to another embodiment comprises: a composition preparation operation, an operation of obtaining an unstretched sheet, and an operation of obtaining a multilayer film.

The composition preparation operation is an operation of preparing a first-layer composition comprising diol residues and dicarboxylic acid residues, and a second-layer composition comprising a butanediol vinyl alcohol copolymer (BVOH).

Detailed descriptions of the first-layer composition and the second-layer composition are omitted here since they overlap with the descriptions provided above.

The first-layer composition and the second-layer composition may each be prepared in chip form. When each composition is prepared in chip form, storage may be facilitated and application of a melting operation may be easier.

The preparation operation may further comprise a drying operation of individually drying the first-layer composition and the second-layer composition in chip form. The second-layer composition may be applied using dried packaging as is.

The drying may be performed at 40°C to 100°C, or 50°C to 80°C. The drying may be performed for 2 hours to 24 hours, or 6 hours to 18 hours. For example, hot-air drying may be applied. A content of moisture in the dried chips may be 300 ppm or less, or 200 ppm or less. The moisture content may be 30 ppm or more. When chips dried to such a moisture level are applied, generation of bubbles due to moisture may be substantially suppressed, appearance of the manufactured product may be improved, and smooth processability may be imparted.

The operation of obtaining an unstretched sheet is an operation of melt-extruding the first-layer composition and the second-layer composition, respectively, to obtain an unstretched sheet comprising a laminate in which a first layer 11 comprising the first-layer composition and a second layer 12 comprising the second-layer composition are alternately laminated.

A melt extrusion temperature of the first-layer composition may be 220°C or higher. Specifically, the melt extrusion temperature of the first-layer composition may be 230°C or higher, or 240°C or higher.

A melt extrusion temperature of the second-layer composition may be 180°C or higher. Specifically, the melt extrusion temperature of the second-layer composition may be 190°C or higher, or 200°C or higher.

The melt extrusion temperature of the first-layer composition and the melt extrusion temperature of the second-layer composition may be the same or different. For example, a difference between the melt extrusion temperature of the first-layer composition and the melt extrusion temperature of the second-layer composition may be 20°C or less, or 15°C or less. The difference may be 0°C or more. A difference in melting temperature may be provided for the purpose of adjusting melt viscosity. Specifically, when an extruder is configured in the order of a melting conduit (through which molten resin flows), a laminating means (e.g., a multilayer block), and a die, the temperatures of the melting conduits for the first-layer composition and the second-layer composition may be set differently. When the melt extrusion operation is carried out in the above-described manner, control of layer thicknesses within the film may be more easily achieved.

The laminate may be such that the first layer and the second layer are alternately laminated in three or more layers. Specifically, the laminate may be such that the first layer and the second layer are alternately laminated in 3 to 255 layers.

As means of alternate lamination, lamination means applied in film manufacturing may be employed, and, for example, a feed block or a multi-manifold may be applied.

The operation of obtaining the unstretched sheet may comprise a sheet-forming operation such as closely contacting the laminate with a cooling roll.

The operation of obtaining the multilayer film is an operation of obtaining the multilayer film by stretching and heat-setting the laminated sheet.

The stretching may be biaxial stretching, and sequential biaxial stretching may be applied. Specifically, the stretching may be 2 to 4 times in a machine direction (MD) at 40°C to 130°C, and 3 to 6 times in a transverse direction (TD) at 50°C to 150°C.

The heat-setting operation may be performed at 50°C to 300°C, 100°C to 200°C, 125°C to 175°C, or 140°C to 160°C.

Through the stretching and the heat-setting, the multilayer film may have a reduced thickness while improving mechanical strength, and may also improve dimensional stability.

Detailed descriptions of the multilayer film and the laminate are omitted here since they overlap with the descriptions provided above.

The thickness ratio, number of laminated layers, and the like are as described above, and in consideration of subsequent stretching operations, the thicknesses of the respective layers may be controlled and applied.

By this method, a multilayer film having excellent quality may be manufactured in a relatively simple and efficient manner. Features of the multilayer film thus manufactured are described below.

**Display Device**

A display device according to another embodiment comprises the multilayer film described above. Detailed descriptions of the multilayer film are omitted here since they overlap with the descriptions provided above.

The display device may comprise a light-emitting portion. The light-emitting portion may comprise a layer that directly or indirectly outputs light. Specifically, the light-emitting portion may comprise a light source that directly outputs light, and in addition to the light source that directly outputs light, may further comprise an insulating layer, a color filter layer, and a wavelength conversion layer.

The light source may be a backlight unit that outputs white light, or a backlight unit that outputs blue light. The light source may be an organic light emitting element comprising a hole injection layer, a hole transport layer, an electron transport layer, and an organic layer.

The display device may comprise an encapsulation layer disposed on the light-emitting portion. When the organic layer is exposed to an external environment such as oxygen and moisture, oxidation of constituent materials may be promoted, and light-emitting characteristics may be reduced. The wavelength conversion layer may comprise a plurality of quantum dots. The quantum dots may exhibit reduced light-emitting characteristics when exposed to an external environment such as oxygen and moisture. The encapsulation layer disposed on the light-emitting portion and comprising the multilayer film described above may effectively prevent the organic layer or the wavelength conversion layer included in the light-emitting portion from being exposed to external oxygen due to the low oxygen permeability of the multilayer film.

**Packaging Material**

A packaging material according to another embodiment comprises the multilayer film described above. Detailed descriptions of the multilayer film are omitted here since they overlap with the descriptions provided above.

The packaging material may be, for example, a disposable packaging material or a food packaging material, and the multilayer film may be directly applied, or aluminum foil, a color layer, and the like may be further included.

The packaging material may effectively prevent packaged contents from being exposed to external oxygen due to the low oxygen permeability of the multilayer film.

Hereinafter, the present invention will be described in more detail through specific embodiments. The following embodiments are merely examples for understanding the present invention, and the scope of the present invention is not limited thereto.

**[Example 1]**

<Preparation of First-Layer Composition>

The first-layer composition was prepared by mixing a diol component and a dicarboxylic acid component in an autoclave equipped with a stirrer and a distillation column.

Specifically, in the first-layer composition, the diol component comprised 80 mol% of ethylene glycol (EG), 15 mol% of neopentyl glycol (NPG), and 5 mol% of diethylene glycol (DEG), and the dicarboxylic acid component comprised 100 mol% of dimethyl terephthalate (DMT).

The first-layer composition was subjected to a transesterification reaction together with a transesterification catalyst. Specifically, manganese acetate was applied as the catalyst in an amount of 0.07 parts by weight relative to 100 parts by weight of the dicarboxylic acid. Thereafter, the transesterification reaction was carried out while heating to 220°C and removing methanol as a by-product.

When the transesterification reaction was completed, 0.07 parts by weight of silica having an average particle diameter of 0.28 $\mu$m, relative to 100 parts by weight of the dicarboxylic acid, and 0.4 parts by weight of trimethyl phosphate as a stabilizer, relative to 100 parts by weight of the dicarboxylic acid, were added to the first-layer composition.

After 5 minutes, 0.035 parts by weight of antimony trioxide and 0.005 parts by weight of tetrabutyl titanate were added as polymerization catalysts, and stirring was performed for 10 minutes.

Subsequently, the first-layer composition was transferred to a second reactor equipped with vacuum facilities, and polymerization was carried out for about 210 minutes while gradually reducing pressure and heating to 285°C, thereby obtaining the first-layer composition.

<Second-Layer Composition>

As the second-layer composition, a butanediol vinyl alcohol copolymer (BVOH) produced by copolymerization of butanediol and vinyl acetate followed by hydrolysis of the vinyl acetate may be applied.

Alternatively, the butanediol vinyl alcohol copolymer (BVOH) may be applied as BVOH sold by Mitsubishi Chemical under the name NICHIGO G-POLYMER™. Specifically, BVE8049P of NICHIGO G-POLYMER™ was applied.

<Manufacture of Multilayer Barrier Film>

The first-layer composition was subjected to a first drying operation at 100°C for 4 hours or more using a dehumidifying dryer, followed by a second drying operation at 160°C for 6 hours or more to remove moisture. The second-layer composition was applied as dried packaging.

Using two extruders and a feed block capable of laminating three layers, the first-layer composition was melt-extruded with an extruder at 240°C, and the second-layer composition was melt-extruded with an extruder at 200°C. The discharge ratio (volume ratio) of the first-layer composition to the second-layer composition was set to 90:10.

In the three-layer feed block, the first-layer composition was branched into two skin layers, and the second-layer composition was branched into an intermediate layer, followed by lamination. Thereafter, the laminate passed through a 400 mm die and was brought into close contact with a cooling roll cooled to 20°C, thereby obtaining an unstretched sheet having three layers in total.

The three-layer unstretched sheet was then stretched 3.0 times in a machine direction (MD) at 85°C, stretched 4.0 times in a transverse direction (TD) at 110°C, and heat-set at 150°C with a relaxation ratio of 1%, thereby manufacturing a biaxially stretched three-layer film having a thickness of 20 $\mu$m (Example 1).

### [Examples 2 to 4]

Example 2 was manufactured in the same manner as Example 1, except that after stretching and heat-setting, the thickness was adjusted to 45 $\mu$m.

Example 3 was manufactured in the same manner as Example 1, except that after stretching and heat-setting, the thickness was adjusted to 60 $\mu$m.

Example 4 was manufactured in the same manner as Example 1, except that the discharge ratio (volume ratio) of the first resin to the second resin was applied as 95:5.

### [Examples 5 to 8]

Example 5 was manufactured in the same manner as Example 1, except that in the multilayer feed block, the first-layer composition was branched into 36 layers and the second-layer composition was branched into 36 layers, alternately laminated so that the first layer 11 and the second layer 12 were laminated into 73 layers, and skin layers were disposed at the uppermost and lowermost outermost layers. The skin layers comprised the first-layer composition, having the same composition as the first layer 11.

Example 6 was manufactured in the same manner as Example 5, except that the discharge ratio (volume ratio) of the first-layer composition to the second-layer composition was applied as 70:30.

Example 7 was manufactured in the same manner as Example 1, except that in the multilayer feed block, the first-layer composition was branched into 72 layers and the second-layer composition was branched into 72 layers, alternately laminated so that the first layer 11 and the second layer 12 were laminated into 145 layers each, and skin layers were disposed at the uppermost and lowermost outermost layers. The skin layers comprised the first-layer composition, having the same composition as the first layer 11.

Example 8 was manufactured in the same manner as Example 7, except that the discharge ratio (volume ratio) of the first-layer composition to the second-layer composition was applied as 70:30.

### [Comparative Examples 1 to 4]

Comparative Example 1 used the first-layer composition described in Example 1. The first-layer composition was subjected to a first drying at 100°C for 4 hours or more and a second drying at 160°C for 6 hours or more using a dehumidifying dryer to remove moisture. The first-layer composition was then melt-extruded with an extruder at 240°C. Thereafter, the first-layer composition passed through a 400 mm die and was brought into close contact with a cooling roll cooled to 20°C, thereby obtaining an unstretched single-layer sheet. The obtained unstretched single-layer sheet was stretched 3.0 times in a machine direction (MD) at 85°C, stretched 4.0 times in a transverse direction (TD) at 100°C, and heat-set at 150°C with a relaxation ratio of 1%, thereby manufacturing a biaxially stretched single-layer film having a thickness of 45 $\mu$m (Comparative Example 1).

Comparative Example 2 was manufactured in the same manner as Example 2, except that the second-layer composition applied was an ethylene vinyl alcohol copolymer (EVOH) instead of a butanediol vinyl alcohol copolymer (BVOH).

Comparative Example 3 was manufactured in the same manner as Comparative Example 2, except that in the multilayer feed block, the first-layer composition was branched into 36 layers and the second-layer composition was branched into 36 layers, alternately laminated so that the first layer 11 and the second layer 12 were laminated into 73 layers each, and skin layers were disposed at the uppermost and lowermost outermost layers. The skin layers comprised the first-layer composition, having the same composition as the first layer 11.

**[Evaluation Example 1: Oxygen Permeability Evaluation]**

The oxygen permeability of the multilayer barrier film manufactured above was measured in accordance with ASTM D3985-17, using OX-TRAN 702 (MOCON, USA), under conditions of a test area of 50 cm$^2$, 1 atmosphere, a temperature of 23.0 $\pm$ 0.5°C, and 0% relative humidity. [Unit: cc/m$^2$·day]

**[Evaluation Example 2: Film Interfacial Delamination]**

The multilayer barrier film manufactured above was crumpled by hand with force for 5 seconds, and the presence or absence of delamination between the first resin layer and the second resin layer was determined. When no film interfacial delamination occurred, the evaluation was determined as good; when interfacial delamination occurred, the evaluation was determined as poor.

**[Evaluation Example 3: Film Water Dispersibility]**

Ten specimens of the multilayer film manufactured above, each having a size of 1 cm × 1 cm, were prepared and placed in a 500 ml beaker. While maintaining the water temperature at 60°C, the specimens were stirred at 300 rpm for 30 minutes using a stirrer. Thereafter, the thickness of the specimens was checked to determine water dispersibility. When water dispersibility occurred, the evaluation was determined as good.

**[Evaluation Example 4: Film Processability]**

The thickness of the multilayer barrier film manufactured above was measured at 2 cm intervals over a width of 200 cm, and the difference ($MTD_{200}$) between maximum thickness ($THK_{max}$) and minimum thickness ($THK_{min}$) was determined. When the difference between the maximum thickness and the minimum thickness was 3 μm or less, the evaluation was determined as good.

Each measurement result is summarized in Tables 1 and 2 below.

[Table 1]

| Examples # | | Ex.1 | Ex.2 | Ex.3 | Ex.4 | Ex.5 | Ex.6 | Ex.7 | Ex.8 |
|---|---|---|---|---|---|---|---|---|---|
| Film thickness (μm) | | 20 | 45 | 60 | 20 | 20 | 20 | 20 | 20 |
| No. of skin layers | | 2 | 2 | 2 | 2 | 2 | 2 | 2 | 2 |
| No. of layers per 1st/2nd set | | - | - | - | - | 36 | 36 | 72 | 72 |
| Total no. of laminated layers | | 3 | 3 | 3 | 3 | 73 | 73 | 145 | 145 |
| Compo sition | 1st-layer composition | 90 | 90 | 90 | 95 | 90 | 70 | 90 | 70 |
| | 2nd-layer composition (BVOH) | 10 | 10 | 10 | 5 | 10 | 30 | 10 | 30 |
| | 2nd-layer composition (EVOH) | - | - | - | - | - | - | - | - |
| Film Prop-erties | Oxygen permeability (cc/(m$^2$·atm·da y)) day ) | <0.01 | <0.01 | <0.01 | <0.01 | <0.01 | <0.01 | <0.01 | <0.01 |
| | Interfacial delamination | Good | Good | Good | Good | Good | Good | Good | Good |
| | Water dispersibility | Good | Good | Good | Good | Good | Good | Good | Good |
| | $MTD_{200}$(μm) | 2.6 | 2.4 | 1.9 | 2.7 | 2.5 | 3.0 | 2.7 | 2.9 |
| | Haze(%) | 6.5 | 10 | 25 | 5.4 | 4.7 | 5.0 | 4.1 | 4.5 |
| | Water vapor transmis-sion rate (g/m$^2$·day) | 40 | 24 | 23 | 42 | 38 | 43 | 39 | 45 |
| | Light transmittance | 90.76 | 90.23 | 90.02 | 90.83 | 90.88 | 90.86 | 90.95 | 90.90 |

[Table 2]

| Comp. Ex. # | | Comp. Ex.1 | Comp. Ex.2 | Comp. Ex.3 |
|---|---|---|---|---|
| Film thickness ($\mu$m) | | 45 | 45 | 20 |
| No. of skin layers | | - | 2 | 2 |
| No. of layers per 1st/2nd set | | - | - | 36 |
| Total no. of laminated layers | | 1 | 3 | 73 |
| Composition | 1st-layer composition | 100 | 90 | 90 |
| | 2nd-layer composition (BVOH) | - | - | - |
| | 2nd-layer composition (EVOH) | - | 10 | 10 |
| Film Proper-ties | Oxygen permeability (cc/($m^2$·atm·day))day ) | 72.4 | 6.1 | 4.3 |
| | Interfacial delamination | - | Poor | Poor |
| | Water dispersibility | Not dissolved in water | Not dissolved in water | Not dissolved in water |
| | $MTD_{200}$($\mu$m) | 1.9 | 11.1 | 8.4 |
| | Haze(%) | 3.93 | 4.8 | 3.2 |
| | Water vapor transmission rate (g/$m^2$·day) | 24 | 26 | 22 |
| | Light transmittance | 91 | 90.89 | 91.2 |

Comparative Example 1 is a film using only the first layer 11. The film according to Comparative Example 1 was confirmed to have a high oxygen transmission rate and thus could not function as a barrier film to block oxygen. Comparative Example 2 is a three-layer co-extruded film manufactured by applying ethylene vinyl alcohol copolymer (EVOH) as the second-layer composition instead of butanediol vinyl alcohol copolymer (BVOH), unlike the other embodiments. The multilayer film according to Comparative Example 2 was confirmed to have a high oxygen transmission rate and thus could not function as a barrier film to block oxygen.

Comparative Example 3 was manufactured in the same manner as Comparative Example 2, except that in the multilayer feed block, the first-layer composition was branched into 36 layers and the second-layer composition was branched into 36 layers, alternately laminated so that the first layer 11 and the second layer 12 were laminated into 73 layers, and skin layers were disposed at the uppermost and lowermost outermost layers. The skin layers comprised the first-layer composition, having the same composition as the first layer 11. The film according to Comparative Example 3 was confirmed not to reduce the oxygen transmission rate to a desirable level.

In contrast, the films manufactured according to the embodiments of the embodiment had an oxygen transmission rate of 0.01 cc/($m^2$·atm·day) or less. In addition, the films manufactured according to the embodiments of the invention were evaluated to have good interfacial delamination characteristics in the evaluation examples. Further, the films manufactured according to the embodiments of the invention were evaluated to have good water dispersibility in the evaluation examples. Moreover, the films manufactured according to the examples of the embodiments were evaluated to have a maximum thickness deviation ($MTD_{200}$) of 3 $\mu$m or less in the evaluation examples.

Although the preferred examples of the embodiment have been described in detail above, the scope of the embodiment is not limited thereto, and various modifications and improvements made by those skilled in the art using the basic concept of the embodiment defined in the following claims also fall within the scope of the invention.

(DESCRIPTION OF REFERENCE NUMERALS)

| 100: | multilayer film | 10: | laminate |
|---|---|---|---|
| 11: | first layer | 12: | second layer |

**Claims**

1. A multilayer film, comprising: a laminate comprising a first layer and a second layer disposed on the first layer;

   wherein the first layer comprises a polyester resin comprising diol residues and dicarboxylic acid residues;
   wherein the second layer comprises a butenediol vinyl alcohol copolymer; and
   wherein the laminate has an oxygen permeability of 0.1 cc/m$^2$·day·atm or less at 23°C.

2. The multilayer film of claim 1,
   wherein the diol residues are selected from the group consisting of ethylene glycol residues, diethylene glycol residues, neopentyl glycol residues, and combinations thereof.

3. The multilayer film of claim 1,
   wherein the diol residues comprise 5 to 35 mol% of neopentyl glycol residues based on the total diol residues.

4. The multilayer film of claim 1,
   wherein a melting point of the first layer is equal to or lower than a thermal decomposition temperature of the second layer.

5. The multilayer film of claim 1,
   wherein a glass transition temperature of the second layer is 60°C or higher.

6. The multilayer film of claim 1,

   wherein a maximum thickness deviation represented by Equation 1 is 3 μm or less:

   [Equation 1]

   $$MTD_{50} = THK_{max} - THK_{min}$$

   wherein, in Equation 1, $MTD_{50}$ denotes the maximum thickness deviation; $THK_{max}$ is a maximum thickness when the thickness is measured at 2 cm intervals on a specimen of the multilayer film having a width of 50 cm; and $THK_{min}$ is a minimum thickness when the thickness is measured at 2 cm intervals on a specimen of the multilayer film having a width of 50 cm.

7. The multilayer film of claim 1,

   wherein the laminate is formed by alternately laminating the first layer and the second layer into 3 to 225 layers, and
   wherein the first layer is located at an outermost layer of the laminate.

8. The multilayer film of claim 1,
   wherein the laminate has a water vapor transmission rate of 50 g/m$^2$·day or less.

9. A display device, comprising:

   a light-emitting portion; and
   an encapsulation layer disposed on the light-emitting portion;
   wherein the encapsulation layer comprises the multilayer film according to claim 1.

10. A packaging material comprising the multilayer film according to claim 1.

100

FIG. 1

100

FIG. 2

FIG. 3

## INTERNATIONAL SEARCH REPORT

| International application No. |
|---|
| **PCT/KR2024/095175** |

| A. | CLASSIFICATION OF SUBJECT MATTER |
|---|---|

**B32B 27/36**(2006.01)i; **B32B 27/30**(2006.01)i; **B32B 27/08**(2006.01)i; **C08G 63/16**(2006.01)i

According to International Patent Classification (IPC) or to both national classification and IPC

| B. | FIELDS SEARCHED |
|---|---|

Minimum documentation searched (classification system followed by classification symbols)

B32B 27/36(2006.01); B32B 27/08(2006.01); B32B 27/10(2006.01); B32B 3/02(2006.01); B32B 9/00(2006.01); B32B 9/04(2006.01); B65D 65/40(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에스테르(polyester), 디올(diol), 디카복실산(dicarboxylic acid), 부텐디올 비닐 알코올(butenediol vinyl alcohol), 에틸렌글리콜(ethylene glycol), 네오펜틸글리콜(neopentyl glycol), 용융 점(melting point), 두께(thickness), 산소 투과도(oxygen transmittance), 투습도(moisture permeability), 표시 장치 (display device), 다층 필름(multi-layer film)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2008-221811 A (DAINIPPON PRINTING CO., LTD.) 25 September 2008 (2008-09-25)<br>See paragraphs [0008], [0014]-[0016], [0019]-[0023], [0028], [0030], [0031] and [0056]; and figure 1. | 1-10 |
| Y | JP 2019-181960 A (TOYOBO CO., LTD.) 24 October 2019 (2019-10-24)<br>See paragraphs [0012]-[0014], [0016], [0026]-[0031] and [0038]. | 1-10 |
| Y | WO 2017-022622 A1 (FUJIFILM CORPORATION) 09 February 2017 (2017-02-09)<br>See paragraphs [0023]-[0034] and [0057]-[0064]; and figures 1A-2. | 6,9 |
| A | KR 10-2016-0079539 A (SKC CO., LTD.) 06 July 2016 (2016-07-06)<br>See claims 1-14. | 1-10 |

| ✓ | Further documents are listed in the continuation of Box C. | ✓ | See patent family annex. |
|---|---|---|---|

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 June 2024** | **10 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/095175** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2021-160155 A (ACHILLES CORP.) 11 October 2021 (2021-10-11)<br>    See claims 1-4. | 1-10 |

Form PCT/ISA/210 (second sheet) (July 2022)

**INTERNATIONAL SEARCH REPORT**
Information on patent family members

International application No.

**PCT/KR2024/095175**

| Patent document cited in search report | | | Publication date (day/month/year) | Patent family member(s) | | | Publication date (day/month/year) |
|---|---|---|---|---|---|---|---|
| JP | 2008-221811 | A | 25 September 2008 | JP | 5003222 | B2 | 15 August 2012 |
| JP | 2019-181960 | A | 24 October 2019 | JP | 2016-020085 | A | 04 February 2016 |
| | | | | JP | 6911889 | B2 | 28 July 2021 |
| WO | 2017-022622 | A1 | 09 February 2017 | CN | 107848256 | A | 27 March 2018 |
| | | | | JP | 6599992 | B2 | 30 October 2019 |
| | | | | US | 2018-0147808 | A1 | 31 May 2018 |
| KR | 10-2016-0079539 | A | 06 July 2016 | KR | 10-1733193 | B1 | 08 May 2017 |
| JP | 2021-160155 | A | 11 October 2021 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100516550
- KR 101890108

- KR 101970168